# EUROPÄISCHE PATENTSCHRIFT

(11) **EP 1 219 527 B1**
(45) Veröffentlichungstag und Bekanntmachung des Hinweises auf die Patenterteilung: **28.01.2004**
(21) Anmeldenummer: 01123123.0
(22) Anmeldetag: 27.09.2001
(51) Int. Cl.: B62D 15/02, G01D 5/12

(54) **Lenkwinkelmesseinrichtung**
Steering angle measuring device
Dispositif de mesure d'angle de braquage

(30) Priorität: 27.12.2000 DE 10065240
(43) Veröffentlichungstag der Anmeldung: 03.07.2002
(73) Patentinhaber: Valeo Schalter und Sensoren GmbH, 74321 Bietigheim-Bissingen (DE)
(72) Erfinder: Grüner, Roland, 71732 Tamm (DE); Ruff, Achim, 74354 Besigheim (DE); Hadobas-Roessel, Katalin, 47051 Duisburg (DE)
(74) Vertreter: Dreiss, Fuhlendorf, Steimle & Becker

(56) Entgegenhaltungen:
- EP-A- 0 997 707
- DE-A- 19 601 965
- DE-A- 19 838 731
- DE-A- 19 933 048
- US-A- 5 243 188

## Beschreibung

Die Erfindung betrifft eine Lenkwinkelmesseinrichtung zur Bestimmung des Lenkwinkels eines Fahrzeuges, mit einer eine Codespur aufweisenden drehbar gelagerten Codescheibe, mit einem Zählwerk zur Zählung der Umdrehungen der Codescheibe, wobei das Zählwerk ein an der Codescheibe angeordnetes Auslöseelement und ein von dem Auslöseelement betätigbares, drehbar gelagertes, mit einem Magneten verbundenes Zählrad, insbesondere ein Zählzahnrad, aufweist, wobei das Zählrad von dem Auslöseelement bei vorzugsweise jeder vollen Umdrehung der Codescheibe schrittweise um einen definierten Winkel verdreht wird, mit wenigstens einem mit dem Magneten zusammenwirkenden, ortsfest angeordneten Magnetfeldsensor, wobei der Magnetfeldsensor mit einer Auswerteelektronik verbunden ist, die die Position des Magneten und daraus die Umdrehungen der Codescheibe bestimmt. Eine derartige Lenkwinkelmesseinrichtung ist zum Beispiel aus der DE 19 933 048 A1 bekannt.

Lenkwinkelmesseinrichtungen sind in vielfältiger Art und Weise bekannt. Aus der DE 196 01 965 A1 ist eine Lenkwinkelmesseinrichtung bekannt geworden, welche ein Zählwerk zur Zählung der vollen Umdrehungen der Codescheibe aufweist. Hierzu findet ein Schaltrad Verwendung, dessen Schaltstellung über Schleifkontakte eines kreissektorförmigen Kontaktstückes erfasst wird. Es hat sich allerdings herausgestellt, dass eine derartige, mechanische Erfassung der Position des Schaltrades einem Verschleiss unterliegt und sehr anfällig ist.

Die DE 199 33 048 A1 schlägt deshalb vor, die Position des Schaltrades kontakt- bzw. berührungslos zu erfassen. Hierfür ist an dem Schaltrad ein Magnet vorhanden. Die Position des Magnetes wird über Magnetfeldsensoren bestimmt.

Eine derartige Anordnung hat allerdings den Nachteil, dass für das Schaltrad, den entsprechenden Magneten und die Magnetfeldsensoren, die auf einer Leiterplatte angeordnet sind, relativ viel Bauraum benötigt wird.

Der Erfindung liegt deshalb die Aufgabe zugrunde, eine Lenkwinkelmesseinrichtung vorzuschlagen, bei welcher die Position des Schaltrades zuverlässig erfasst werden kann, wobei die Lenkwinkelmesseinrichtung dennoch kompakt und insbesondere sehr flach ausgeführt sein soll.

Diese Aufgabe wird bei einer Lenkwinkelmesseinrichtung der eingangs beschriebenen Art erfindungsgemäß dadurch gelöst, dass der Magnet auf der einen Seite der Codescheibe und das Schaltrad auf der anderen Seite der Codescheibe angeordnet ist. Dabei greift der dem Schaltrad bzw. dem Magneten zugewandte Bereich der Codescheibe zwischen das Schaltrad und den Magneten.

Dies hat den Vorteil, dass im Gegensatz zu den bekannten Lenkwinkelmesseinrichtungen weniger Bauraum innerhalb der Lenkwinkelmesseinrichtung benötigt wird. Bei den bekannten Lenkwinkelmesseinrichtungen ist der Magnet direkt auf der der Codescheibe abgewandten Seite des Schaltrades an dem Schaltrad angeordnet. Außerdem muss der Magnet in unmittelbarer Nähe zu der Leiterplatte bzw. zu den auf der Leiterplatte angeordneten Magnetfeldsensoren angeordnet sein, damit die Sensoren das Magnetfeld des Magneten erfassen können. Durch die erfindungsgemäße Lösung wird der Magnet und das Schaltrad räumlich voneinander getrennt. Das Schaltrad liegt erfindungsgemäß auf der einen Seite der Codescheibe. Der Magnet auf der anderen Seite der Codescheibe. Hierdurch wird insbesondere erreicht, dass die Raumverhältnisse besser ausgenutzt werden, da nicht das Schaltrad, der Magnet und auch die entsprechenden Magnetfeldsensoren auf ein und derselben Seite der Codescheibe angeordnet sind. Vielmehr greift der jeweilige dem Schaltrad zugewandte Abschnitt der Codescheibe zwischen das Schaltrad und den Magneten.

Bei einer besonders bevorzugten Ausführungsform der Erfindung ist der Magnet als eine Magnetscheibe ausgebildet. Dies hat den Vorteil, dass die Lagerstellen des drehbar gelagerten, drehfest mit dem Schaltrad verbundenen Magneten gleichmäßig beansprucht werden.

Bei einer weiteren Ausgestaltung der Erfindung ist vorgesehen, dass die Magnetscheibe polarisierte Segmente aufweist, wobei die polarisierten Segmente vorzugsweise einen definierten Code bilden. Dies hat den Vorteil, dass die von den Magnetfeldsensoren erfassten, sich ändernden Magnetfelder eindeutig einer entsprechenden Position des Magneten bzw. des Schaltrades zugeordnet werden können. Durch Aneinandergrenzen von verschieden polarisierten Segmenten erhöht sich zudem der Signalsprung von beispielsweise einem Nord-Pol polarisierten Segment zu einem Süd-Pol polarisierten Segment.

Erfindungsgemäß kann weiterhin vorgesehen sein, dass die Magnetscheibe mehrere Codespuren mit entsprechend polarisierten Segmentabschnitten aufweist. Hierdurch kann die Genauigkeit der Bestimmung der Position der Magnetscheibe erhöht werden.

Vorteilhafterweise ist der Magnet und das Schaltrad parallel beabstandet zueinander auf einer gemeinsamen Welle angeordnet. Eine derartige Anordnung bzw. Lagerung kann auf einfache Art und Weise realisiert werden und ist insbesondere kostengünstig in der Herstellung.

Zur drehfesten Verbindung des Magneten und des Schaltrades und ggf. der Welle kann insbesondere eine form- und/oder kraftschlüssige Verbindung vorgesehen sein. Als formschlüssige Verbindung kommt insbesondere eine Steckverbindung in Betracht, wobei der Magnet und das Schaltrad durch Ineinderstecken von entsprechend ausgebildeten Abschnitten drehfest miteinander verbunden werden.

Erfindungsgemäß ist weiterhin denkbar, dass die Welle in einem ein- oder mehrteiligen Gehäuse gehaltert ist. Dies hat den Vorteil, dass extra Bauteile zur Halterung der Welle nicht erforderlich sind. Das Gehäuse weist vorzugsweise an den entsprechenden Stellen, an denen die Welle gehaltert werden soll, die freien Wellenenden aufnehmende Aussparungen in Form von Lagerausschnitten auf.

Es kann auch vorgesehen sein, dass das Schaltrad und die Welle einstückig als ein Bauteil ausgeführt sein kann.

Die eingangs genannte Aufgabe wird außerdem durch ein Zählwerk für eine im Vorhergehenden beschriebene Lenkwinkelmesseinrichtung gelöst.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: den Ausschnitt einer erfindungsgemäßen Lenkwinkelmesseinrichtung im Längsschnitt;
- Figur 2: eine perspektivische Ansicht eines Ausschnitts einer teilweise montierten erfindungsgemäßen Lenkwinkelmesseinrichtung;
- Figur 3: das Zählzahnrad der Lenkwinkelmesseinrichtung gemäß den Figuren 1 und 2;
- Figur 4: die Magnetscheibe der Lenkwinkelmesseinrichtung nach Figur 1 und 2; und
- Figur 5: ein Gehäuseteil der Lenkwinkelmesseinrichtung nach Figur 1 und 2.

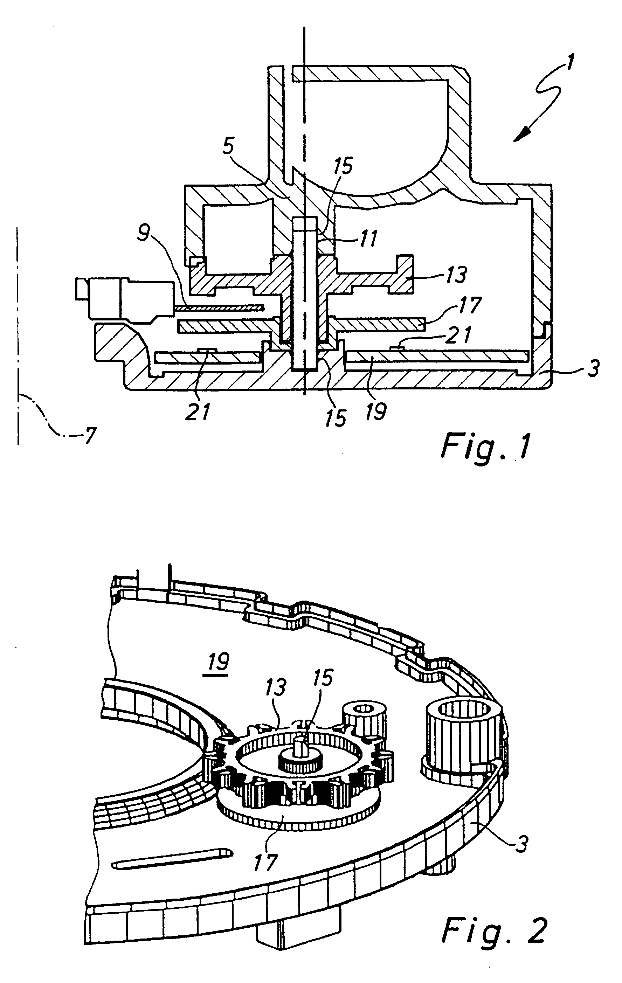

Figur 1 zeigt eine Lenkwinkelmesseinrichtung 1 mit einem Grundgehäuse 3 und einem Gehäuseoberteil 5. Die Lenkwinkelmesseinrichtung 1 weist weiterhin eine um eine Achse 7 drehbar gelagerte, wenigstens eine Codespur aufweisende, Codescheibe 9 auf. Der Drehwinkel der Codescheibe 9 entspricht hierbei dem Drehwinkel des nicht dargestellten Lenkrades eines Kraftfahrzeuges. Über die auf der Codescheibe 9 vorhandenen Codespur kann mittels einer nicht dargestellten Abtasteinrichtung der momentane Drehwinkel des Lenkrades festgestellt werden. Um die vollen Umdrehungen der Codescheibe 9 zu erfassen, ist ein Zählwerk, das in Figur 1 dargestellt ist, erforderlich. Das Zählwerk umfasst hierbei ein an der Codescheibe 9 vorhandenes, nicht dargestelltes, Auslöseelement. Weiterhin umfasst das Zählwerk ein Zählrad, nämlich ein auf einer Welle 11 drehbar gelagertes Zählrad in Form eines Zählzahnrades 13. Bei jeder vollen Umdrehung der Codescheibe 9 wird das Zählzahnrad 13 von dem nicht dargestellten Auslöseelement um einen Schritt bzw. um einen definierten Winkel verdreht. Ein derart definierter Winkel beträgt vorzugsweise 60°. Damit können mit einer Umdrehung des Zählzahnrades 13 sechs volle Umdrehungen der Codescheibe 9 detektiert werden.

Die Welle 11 ist in Lagerausschnitten 15 des Grundgehäuses 3 und des Gehäuseoberteils 5 drehbar gelagert. Die Welle 11 trägt außerdem ein mit dem Zählzahnrad 13 drehfest verbundenen Magneten 17. Der Magnet 17 ist als Magnetscheibe ausgebildet. Die Magnetscheibe 17 ist hierbei parallel zu der flach ausgebildeten Codescheibe 9, also parallel zu dem Zählzahnrad 13, angeordnet.

In dem Grundgehäuse 3 ist eine Leiterplatte 19 angeordnet, die ebenfalls parallel zu der Magnetscheibe 17 verläuft. Auf der Leiterplatte 19 sind Magnetfeldsensoren 21, beispielsweise Hall-Elemente, vorhanden.

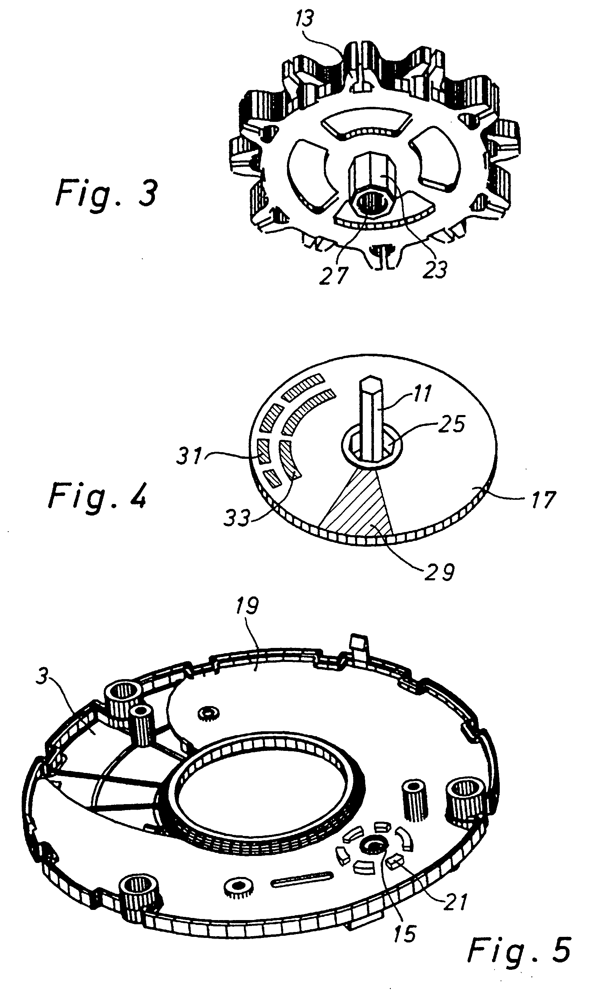

Vorteilhafterweise sind, wie in Figur 5 dargestellt, sechs derartige Magnetfeldsensoren 21 auf einer Kreisbahn um den Lagerausschnitt 15 des Grundgehäuses 3 angeordnet.

Aus der Anordnung gemäß Figur 1 wird deutlich, dass die Codescheibe 9 zwischen dem Magneten 17 und dem Zählzahnrad 13 angeordnet ist. Die Codescheibe 9 ragt hierbei abschnittsweise zwischen das oberhalb der Codescheibe 9 angeordnete Zählzahnrad 13 und der unterhalb der Codescheibe 9 angeordneten Magnetscheibe 17. Dies hat den Vorteil, dass die Lenkwinkelmesseinrichtung sehr flach ausgeführt werden kann.

Figur 2 zeigt das Zählzahnrad 13 sowie die zwischen dem Zählzahnrad 13 und der Leiterplatte 19 angeordnete Magnetscheibe 17 in perspektivischer Ansicht von schräg oben. Die Codescheibe 9 ist in Figur 2 nicht dargestellt.

Figur 3 zeigt die Unterseite des Zählzahnrads 13, an der zur Aufnahme der Welle 11 ein mehrkantiger Lagerzapfen 23 angeformt ist. Das Zählzahnrad 13 bzw. der Lagerzapfen 23 weist ein Durchgangsloch 27 zur Aufnahme der Welle 11 auf.

Die Figur 4 zeigt die Magnetscheibe 17 mit der Welle 11. Im Bereich um die Welle 11 weist die Magnetscheibe 17 eine Einlassung 25, deren Innenkontur der Außenkontur des Lagerzapfens 23 des Zählzahnrades 13 entspricht. Die Welle 11 weist einen mehrkantigen Querschnitt auf.

Der in Figur 4 beispielhaft dargestellte Magnet 17 weist ein polarisiertes Segment 29 auf.

Zur Montage der Lenkwinkelmesseinrichtung 1 kann derart vorgegangen werden, dass zunächst die Welle 11 in den Lagerausschnitt 15 des Grundgehäuses 3 eingesetzt wird. In einem nächsten Arbeitsschritt wird der Magnet 17 auf die Welle 11 aufgeschoben. Danach wird die Codescheibe 9 montiert. In einem nächsten Arbeitsschritt wird das Zählzahnrad 13 derart auf die Welle 11 aufgeschoben, dass die Welle 11 das Durchgangsloch 27 durchgreift und das die Außenkontur des Lagerzapfens 23 in die entsprechende Innenkontur der Einlassung 25 gesteckt wird. Damit wird eine drehfeste Verbindung des Zählzahnrads 13 mit dem Scheibenmagnet 17 realisiert. Schließlich wird das Gehäuseoberteil 5 auf das Gehäuseunterteil 3 aufgesetzt, wobei die Einlassung 15 des Gehäuseoberteils 5 die zweite Lagerstelle für die Welle 11 bildet.

Die in der Figur 1 dargestellte Lenkwinkelmesseinrichtung 1 hat dabei den Vorteil, dass sie entlang einer Montagerichtung montierbar ist. Damit kann die Lenkwinkelmesseinrichtung 1 auf einfache Art und Weise maschinell montiert werden.

Bei Verdrehen der Codescheibe 9 um eine volle Umdrehung wird die Magnetscheibe 17 über das Zählzahnrad 13 um 60° verdreht. Damit gelangt das polarisierte Segment 29 in den Bereich eines anderen Magnetfeldsensors 21. Je nachdem, in welchem Bereich das polarisierte Segment 29 liegt, wird.ein entsprechender Magnetfeldsensor 21 von dem Segment 29 ausgehenden Magnetfeld beaufschlagt. Damit kann berührungsfrei die Lage der Magnetscheibe 17 und daraus die Anzahl der Umdrehungen der Codescheibe 9 bestimmt werden.

Anstelle lediglich ein Segment 29 der Magnetscheibe 17 zu polarisieren, ist es erfindungsgemäß auch denkbar, mehrere Segmente 17 definiert zu polarisieren. Dabei ist denkbar, die Magnetscheibe 17 mittels definierten Polarisierungen mit ein oder mehreren Codespuren zu versehen. Je nach Art des Codes kann dann vorgesehen sein, dass mehrere, entsprechend angeordnete Magnetfeldsensoren 21 zum Einsatz kommen. Ausschnitte von zwei derartigen Codespuren sind in Figur 4 mit dem Bezugszeichen 31 und 33 versehen. Insbesondere kann vorteilhaft sein, wenn auf Nord-Pol und auf Süd-Pol polarisierte Segmente aufeinander folgen. Aufgrund der entgegengesetzten Polarisierung ist die Differenz der aufeinander folgenden Signale größer und damit besser und eindeutiger detektierbar.

## Patentansprüche

1. Lenkwinkelmesseinrichtung (1) zur Bestimmung des Lenkwinkels eines Fahrzeuges, mit einer eine Codespur aufweisenden, drehbar gelagerten Codescheibe (9), mit einem Zählwerk zur Zählung der Umdrehungen der Codescheibe (9), wobei das Zählwerk ein an der Codescheibe (9) angeordnetes Auslöseelement und ein von dem Auslöseelement betätigbares, drehbar gelagertes, mit einem Magneten (17) verbundenes Schaltrad (13), insbesondere ein Schaltzahnrad, aufweist, wobei das Schaltrad (13) von dem Auslöseelement bei vorzugsweise jeder vollen Umdrehung der Codescheibe (9) schrittweise um einen definierten Winkel verdreht wird, und mit wenigstens einem mit dem Magneten (17) zusammenwirkenden, ortsfest angeordneten Magnetfeldsensor (21), wobei der Magnetfeldsensor mit einer Auswerteelektronik verbunden ist, die die Position des Magneten (17) und daraus die Anzahl der Umdrehungen der Codescheibe (9) bestimmt, **dadurch gekennzeichnet, dass** der Magnet (17) auf der einen Seite der Codescheibe (9) und das Schaltrad (13) auf der anderen Seite der Codescheibe (9) angeordnet ist.

2. Lenkwinkelmesseinrichtung (1) nach Anspruch 1, **dadurch gekennzeichnet, dass** der Magnet (17) eine Magnetscheibe ist.

3. Lenkwinkelmesseinrichtung (1) nach Anspruch 2, **dadurch gekennzeichnet, dass** die Magnetscheibe (17) polarisierte Segmente (29) aufweist, wobei die polarisierten Segmente (29) vorzugswiese einen definierten Code bilden.

4. Lenkwinkelmesseinrichtung (1) nach Anspruch 3, **dadurch gekennzeichnet, dass** die Magnetscheibe (13) mehrere Codespuren (31, 33) mit entsprechend polarisierten Segmentabschnitten aufweist.

5. Lenkwinkelmesseinrichtung (1) nach einem der vorhergehenden Ansprüche, **dadurch gekennzeichnet, dass** der Magnet (17) und das Schaltrad (13) parallel beabstandet zueinander auf einer gemeinsamen Welle (11) angeordnet sind.

6. Lenkwinkelmesseinrichtung (1) nach einem der vorhergehenden Ansprüche, **dadurch gekennzeichnet, dass** der Magnet (17) und das Schaltrad (13) und ggf. die Welle (11) form- und/oder kraftschlüssig miteinander verbunden sind.

7. Lenkwinkelmesseinrichtung (1) nach einem der vorhergehenden Ansprüche, **dadurch gekennzeichnet, dass** die Welle (11) in einem ein- oder mehrteiligen Gehäuse drehbar (35) gelagert ist.

## Claims

1. Steering angle measuring device (1) for determining the steering angle of a vehicle, with a rotatably mounted code disc (9) having a code track, with a counter for counting the revolutions of the code disc (9), the counter comprising a release element arranged on the code disc (9) and a rotatably mounted switch wheel (13), in particular a switch gear wheel, which is connected to a magnet (17) and can be activated by the release element, the switch wheel (13) being gradually rotated about a defined angle by the release element, preferably on each complete revolution, and with at least one fixedly arranged magnetic field sensor (21) cooperating with the magnet (17), the magnetic field sensor being connected to an electronic evaluation device, which determines the position of the magnet (17) and, from this, the number of revolutions of the code disc (9), **characterised in that** the magnet (17) is arranged on one side of the code disc (9) and the switch wheel (13) on the other side of the code disc (9).

2. Steering angle measuring device (1) according to claim 1, **characterised in that** the magnet (17) is a magnetic disc.

3. Steering angle measuring device (1) according to claim 2, **characterised in that** the magnetic disc (17) comprises polarised segments (29), the polarised segments (29) preferably forming a defined code.

4. Steering angle measuring device (1) according to claim 3, **characterised in that** the magnetic disc (13) comprises a plurality of code tracks (31, 33) with corresponding polarised segment sections.

5. Steering angle measuring device (1) according to any of the preceding claims, **characterised in that** the magnet (17) and the switch wheel (13) are arranged parallel and spaced apart from one another on a common shaft (11).

6. Steering angle measuring device (1) according to any of the preceding claims, **characterised in that** the magnet (17) and the switch wheel (13), and optionally the shaft (11), are connected to one another in an interlocking and/or non-positive manner.

7. Steering angle measuring device (1) according to any of the preceding claims, **characterised in that** the shaft (11) is rotatably (35) mounted in a single- or multiple-piece housing.

## Revendications

1. Dispositif de mesure (1) d'angle de braquage (1) pour déterminer l'angle de braquage d'un véhicule, équipé d'un disque de code (9) logé de façon pivotante et présentant une piste de code, d'un compteur pour le comptage des rotations du disque de code (9), le compteur présentant un élément de déclenchement disposé sur le disque de code (9) et une roue de commande (13) pouvant être actionnée par l'élément de déclanchement, logée de façon pivotante et reliée à un aimant (17), en particulier une roue dentée de commande, la roue de commande (13) étant tournée progressivement d'un angle défini par l'élément de déclanchement lors de préférence chaque rotation entière du disque de code (9), et d'au moins un capteur de champ magnétique coopérant avec l'aimant (17) et disposé de façon fixe, le capteur de champ magnétique étant relié à une électronique d'analyse, qui détermine la position de l'aimant (17) et à partir de là le nombre des rotations du disque de code (9), **caractérisé en ce que** l'aimant (17) est disposé sur un côté du disque de code (9) et la roue de commande (13) sur l'autre côté du disque de code (9).

2. Dispositif de mesure d'angle de braquage (1) selon la revendication 1, **caractérisé en ce que** l'aimant (17) est un disque magnétique.

3. Dispositif de mesure d'angle de braquage (1) selon la revendication 2, **caractérisé en ce que** le disque magnétique (17) présente des segments (29) polarisés, les segments (29) polarisés formant de préférence un code défini.

4. Dispositif de mesure d'angle de braquage (1) selon la revendication 3, **caractérisé en ce que** le disque magnétique (13) présente plusieurs pistes de code (31, 33) avec des parties de segment polarisées en conséquence.

5. Dispositif de mesure d'angle de braquage (1) selon l'une quelconque des revendications, **caractérisé en ce que** l'aimant (17) et la roue de commande (13) sont disposés sur un arbre (11) commun espacés l'un par rapport à l'autre.

6. Dispositif de mesure d'angle de braquage (1) selon l'une quelconque des revendications précédentes, **caractérisé en ce que** l'aimant (17) et la roue de commande (13) et éventuellement l'arbre (11) sont reliés entre eux par conjugaison de formes et/ou par adhérence.

7. Dispositif de mesure d'angle de braquage (1) selon l'une quelconque des revendications précédentes, **caractérisé en ce que** l'arbre (11) est logé de façon pivotante dans un boîtier (35) en une ou plusieurs parties.
